# EUROPEAN PATENT APPLICATION

(11) **EP 3 459 604 A1**
(43) Date of publication of application: **27.03.2019**
(21) Application number: 18769578.8
(22) Date of filing: 09.07.2018
(51) Int. Cl.: A63C 17/04, A63C 17/12, B62K 11/00

(54) **ROLLER SKATING DEVICE AND ELECTRIC BALANCE VEHICLE**

(30) Priority: 27.07.2017 CN 201710626491; 27.07.2017 CN 201710625533
(71) Applicant: Ninebot (Beijing) Tech Co., Ltd., Beijing 100192 (CN)
(72) Inventor: CHEN, Zhongyuan, Beijing 100192 (CN); JI, Xinjian, Beijing 100192 (CN); TU, Bin, Beijing 100192 (CN); IBRAHEEM, Inam, Beijing 100192 (CN)
(74) Representative: Regimbeau
(86) International application number: PCT/CN2018/094983
(87) International publication number: WO 2019/019905

(57) **Abstract**

The embodiments of the present invention provide a roller-skating device and an electric balance vehicle, including: a footboard, one or more ground contacting elements, a first sensor, one or more driving elements and a first controller. The footboard is coupled to the first sensor and the ground contacting elements which are coupled to the driving element, and the first controller is coupled to the first sensor and the driving element. The footboard is configured to stand on one foot, and to tile forwards or backwards in the case of one foot standing; the one or more ground contacting elements are configured to act due to the actuation of the driving element; the first sensor is configured to sense the posture of the driver on the footboard; the one or more driving elements are configured to generate an output signal for controlling the action of the ground contacting elements and maintaining the entire roller-skating device in balance; and the first controller is configured to control the generation of the output signal depending on the posture, thus the user experience of the electric balance vehicle is improved

## Description

The present application claims benefit of a Chinese Patent Application No. 201710626491.4, entitled "ROLLER-SKATING DEVICE" and filed on July 27, 2017, and a Chinese Patent Application No. 201710625533.2, entitled "Electric Balance Vehicle" and filed on July 27, 2017, the contents of which are incorporated by reference herein in their entirety.

### TECHNICAL FIELD

Embodiments of the present invention relate to the field of roller-skating or transportation tools, and particularly to a roller-skating device and an electric balance vehicle.

### BACKGROUND

Roller-skating shoes used as an entertainment tool or a transportation tool mainly include speed-typed roller-skating shoes and control-typed roller-skating shoes. However, the roller-skating shoes of these two types have a substantially identical structure, i.e. both including a shoe body, a wheel carrier mounted on a sole of the shoe and a number of roller wheels. The difference between the shoes of these two types lies in that the number, size and arrangement of the roller wheels are different in consideration of different using purposes. In use, a skating is implemented by a manpower actuation of the driver, such as the action of pedaling. There may be a limitation where the driver may feel physical fatigue over periods of extended use. Furthermore, the driver must stand on the roller-skating shoes and keep balance during the roller-skating, this is a relatively difficult requirement for a common driver, and finally resulting in a poor user experience of the roller-skating shoes.

### SUMMARY

In view of this, one of the technical problems to be solved by embodiments of the present invention is to provide a roller-skating device and an electric balance vehicle, in order to overcome or relief the above technical drawbacks in the related art.

The embodiments of the present invention provide a roller-skating device, including: a footboard, one or more ground contacting elements, a first sensor, one or more driving elements and a first controller. The footboard is coupled to the first sensor and the one or more ground contacting elements coupled to the driving element, and the first controller is coupled to the first sensor and the driving element. The footboard may be configured to stand on one foot, and to tile forwards or backwards in the case of one foot standing. The one or more ground contacting elements are configured to act due to the actuation of the driving element. The first sensor is configured to sense the posture of the driver on the footboard. The one or more driving elements are configured to generate an output signal for controlling the action of the ground contacting elements and maintaining the entire roller-skating device in balance. The first controller is configured to control the generation of the output signal according to the posture.

The embodiments of the present invention further provide an electric balance vehicle, including the roller-skating device according to one or more embodiments of the present invention. And a connector is provided between two adjacent roller-skating devices, to assemble these two roller-skating devices into a whole ground contacting element ground contacting element ground contacting element.

As can be seen in the above technical solutions, in the embodiments of the present invention, the footboard is coupled to the first sensor and the ground contacting elements which are coupled to the driving element, and the first controller is coupled to the first sensor and the driving element; the footboard may be configured to stand on one foot, and to tile forwards or backwards in the case of one foot standing; the ground contacting elements are configured to act due to the actuation of the driving element; the first sensor is configured to sense the posture of the driver on the footboard; the driving element is configured to generate an output signal for controlling the action of the ground contacting elements and maintaining the entire roller-skating device in balance; and the first controller is configured to control the generation of the output signal according to the posture. Furthermore, by means of an electric balance vehicle made up by at least two roller-skating devices through the connector, the present application prevents the physical fatigue resulting from the roller-skating implemented by manpower actuation. In addition, low operation skill is required for the driver because of the device being able to keep balance all by itself during the roller-skating, such that the user experience is improved. In other words, the present invention generally provides a roller-skating device and an electric balance vehicle with improved user experience.

### BRIEF DESCRIPTION OF DRAWINGS

For the purpose of illustrating the technical solutions in the embodiments of the present invention or in the related art more definitely, the drawings used in the description of the embodiments or the related art will be presented briefly below. It is apparent that the drawings in the description below are solely some embodiments presented in the embodiments of the present invention, and those skilled in the art may obtain other drawings according to these drawings.
FIG. 1 is a brief structural schematic diagram of the structure of the roller-skating device according to a first embodiment of the present invention;
FIG. 2 is a brief structural schematic diagram of the structure of the roller-skating device according to a second embodiment of the present invention;
FIG. 3a and FIG. 3b are two of brief structural schematic diagrams of the structure of the roller-skating device according to a third embodiment of the present invention;
FIG. 3c is a schematic diagram of an alternative of the fixing base in the third embodiment of the present invention;
FIG. 4 is a brief structural schematic diagram of the roller-skating device according to a fourth embodiment of the present invention;
FIG. 5 is a structural schematic diagram of the roller-skating device according to a fifth embodiment of the present invention;
FIG. 6 is a structural schematic diagram of the roller-skating device according to a sixth embodiment of the present invention;
FIG. 7a and FIG. 7b are two of structural schematic diagrams of the roller-skating device according to a seventh embodiment of the present invention;
FIG. 8 is a local schematic diagram of the roller-skating device according to an eighth embodiment of the present invention;
FIG. 9 is a schematic diagram of a control principle of the roller-skating device according to a ninth embodiment of the present invention;
FIG. 10 is a structural schematic diagram of an arrangement of the auxiliary ground contacting elements according to a tenth embodiment of the present invention;
FIG. 11 is a schematic flow chart of a steering control method according to an eleventh embodiment of the present invention;
FIGS. 12-16 are structural schematic diagrams of the electric balance vehicle according to a twelfth, a thirteenth, a fourteenth, a fifteenth and a sixteenth embodiment of the present invention;
FIG. 17 is a schematic diagram of the details of the both ends of the connector according to a seventeenth embodiment of the present invention;
FIG. 18 is a structural schematic diagram of the electric balance vehicle according to an eighteenth embodiment of the present invention;
FIG. 19 is a schematic diagram of the details of the both ends of the connector according to a nineteenth embodiment of the present invention.

### DETAILED DESCRIPTION

Of course, it is not necessary that all above advantages are achieved by one of the technical solutions of the embodiments of the present invention.

In order for the technical solutions of the embodiments of the present invention can be understood better by those skilled in the art, the technical solutions of the embodiments of the present invention will be described definitely and completely according to the drawings of the embodiments of the present invention. It is apparent that the embodiments described are only a part of the embodiments of the present invention, but not all embodiments. And all the other embodiments obtained by those skilled in the art according to the embodiments of the present invention should fall within the scope of protection of the embodiments of the present invention,

The embodiments of the present invention will be further described below according to the drawings of the embodiments of the present invention.

According to the above technical solutions, in the embodiments of the present invention, a footboard is coupled to a first sensor and one or more ground contacting elements which are coupled to a driving element, and a first controller is coupled to the first sensor and the driving element; the footboard may be configured to stand on one foot, and to tile forwards or backwards in the case of one foot standing; the one or more ground contacting elements are configured to act due to the actuation of the driving element; the first sensor is configured to sense the posture of a driver on the footboard; the one or more driving element are configured to generate an output signal for controlling the action of the ground contacting elements and maintaining the entire roller-skating device in balance; and the first controller is configured to control the generation of the output signal depending on the posture. Furthermore, by means of an electric balance vehicle made up by at least two roller-skating devices through the connector, the present application prevents the physical fatigue resulting from the roller-skating implemented by manpower actuation. In addition, low operation skill is required for the driver because of the device being able to keep balance all by itself during the roller-skating, such that the user experience is improved. In other words, the present invention generally provides a roller-skating device and an electric balance vehicle with improved user experience.

In the following embodiments of the present invention, the first sensor is specifically configured to sense the posture of the driver on the footboard and generate pitch sensing data, and the first controller is specifically configured to determine a current pitch angle of the footboard according to the pitch sensing data. The first controller controls the output signal of the driving element according to an expected pitch angle and the current pitch angle of the footboard, e.g. according to an angle difference between the expected pitch angle and the current pitch angle of the footboard.

The above roller-skating device is implemented in a specific form of roller-skating shoes and is exemplarily described below. While, it is noted that the roller-skating shoes are not the only implementation of the roller-skating device, the above roller-skating device may also be implemented as a production suitable for roller-skating with hands, or as any production suitable for the roller-skating of disabled persons.

Further, in the following embodiments, the exemplary ground contacting elements exemplarily are wheels, and the ground contacting elements roll due to the actuation of the driving element. When controlling steering, the rotation speeds of the wheels are controlled to produce a rotation speed difference for controlling steering.

However, in other embodiments, the ground contacting elements are not limited to wheels, they may also be in any other structure suitable for coming into physical contact with the ground. When being applied in a scene of skating or skiing, the ground contacting elements may be structures of approximately flat shape, and the ground contacting elements slide due to the actuation of the driving element. In addition, the wheels are not necessarily circular. If the wheels are not circular, a contacting surface can be adaptively modified to achieve a reasonable physical contact between the contacting surface and the wheels.

Further, in the following embodiments, the first sensor may be, but not limited to, a gyroscope, as long as it is able to sense the posture of the driver on the footboard and generate the pitch sensing data. The first sensor is not shown in the following embodiments.

Further, in the following embodiments, the driving element may be, but not limited to, a motor, as long as it is able to drive the ground contacting elements to act and being implementable according to specific applications. If the driving element is a motor, the output signal of the driving element is an output torque of the driving element.

### FIRST EMBODIMENT (a single ground contacting element)

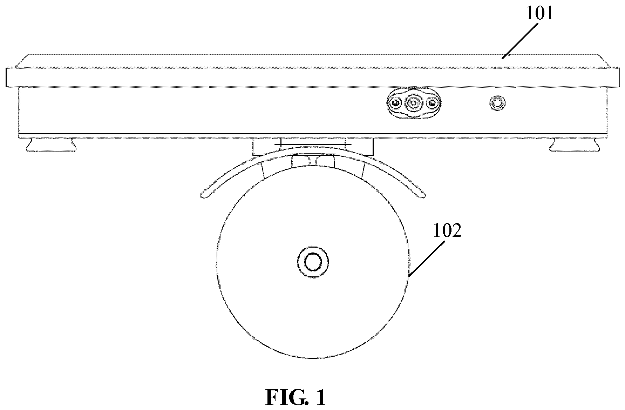

FIG. 1 is a brief structural schematic diagram of the structure of the roller-skating device according to a first embodiment of the present invention. As shown in FIG. 1, in the case of the roller-skating device is implemented in a specific form of roller-skating shoes, the roller-skating shoes specifically includes the above footboard 101, the ground contacting elements 102, the motor (not shown in FIG. 1) and the first controller (not shown in FIG. 1). The footboard is configured to be suitable for the driver to stand on one foot, and the specific number of the ground contacting elements 102 is one, i.e. the driver contacts the ground with only one contacting point via the roller-skating shoe. Accordingly, the number of the driving element is one.

Specifically, the driving element may be directly integrated in a hub of the ground contacting element 102, such that the entire structure of the roller-skating shoes is compact.

It is noted that instead of being integrated in the hub of the ground contacting elements 102, the driving element, for example, may be directly arranged below the footboard 101 via a fixing base or other similar structures.

### SECOND EMBODIMENT (two ground contacting elements 102a and 102b is provided to be spaced by a short distance)

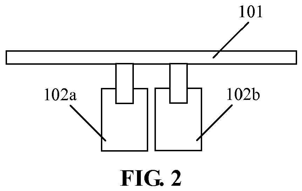

FIG. 2 is a brief structural schematic diagram of the structure of the roller-skating device according to a second embodiment of the present invention. As shown in FIG. 2, the present embodiment differs from the first embodiment in the numbers of the ground contacting elements, i.e. the present embodiment includes two ground contacting elements, 102a and 102b. The ground contacting elements 102a, 102b have a small transverse distance therebetween, to allow the ground contacting elements to be arranged in a position closed to the center of the footboard 101, such that the driver contacts the ground with two contacting point via the roller-skating shoe, and thus the difficulty of use of the roller-skating shoes is reduced.

In the present embodiment, a transmission shaft of the driving element is arranged transversely, i.e. perpendicular to a travel direction of the roller-skating shoes, and the ground contacting elements 102a, 102b are arranged at two ends of the transmission shaft respectively. The driving element is integrated in a hub of the ground contacting elements 102 and directly connected with the ground contacting element 102a via the transmission shaft, and is coupled to the ground contacting element 102b having no driving element integrated. In other words, during the travel of the roller-skating shoes, the ground contacting element 102a provided with the driving element acts as a driving wheel and the ground contacting element 102b without the driving element acts as a driven wheel which is actuated into rotation by the driving wheel.

It is noted that, in other embodiments, each of the ground contacting elements 102a, 102b may be provided with a motor, such that the action of each ground contacting element may be controlled separately.

### THIRD EMBODIMENT (the two ground contacting elements 102a and 102b is provided to be spaced by a long distance)

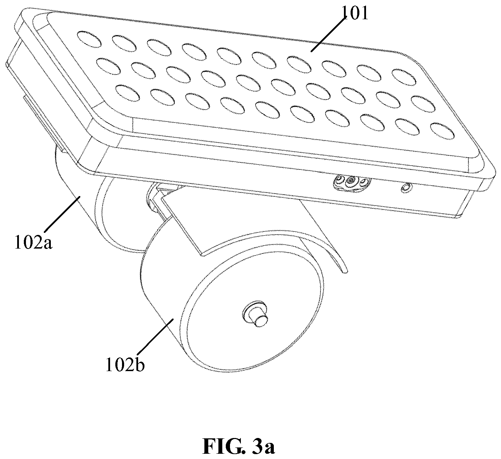

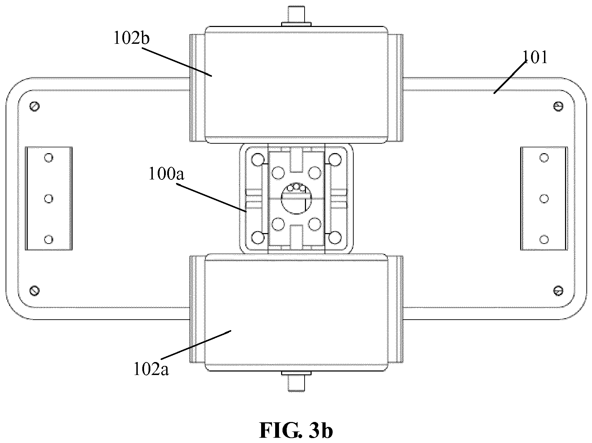

FIG. 3a and FIG. 3b are two of brief structural schematic diagrams of the structure of the roller-skating device according to a third embodiment of the present invention. As shown in FIG. 3a and FIG. 3b, the difference between the present embodiment and the preceding embodiment lies in that the ground contacting element 102a is arranged in a position closed to a left lateral edge of the footboard 101 and the ground contacting element 102b is arranged in a position closed to a right lateral edge of the footboard 101, i.e. there is a relatively large transverse distance between the two contacting points of the ground and the ground contacting elements, thus the difficulty of the use of the roller-skating shoes is further reduced.

Similar to the second embodiment, the ground contacting elements 102a, 102b share a motor, and specifically, a transmission shaft of the driving element is arranged transversely, i.e. perpendicular to a travel direction of the roller-skating shoes, and the ground contacting elements 102a, 102b are arranged at two ends of the transmission shaft respectively. The driving element is integrated in a hub of one of the ground contacting elements 102a and directly connected with the ground contacting element 102a via the transmission shaft, and is coupled to the ground contacting element 102b having no driving element integrated. In other words, during the travel of the roller-skating shoes, the ground contacting element 102a provided with the driving element acts as a driving wheel and the ground contacting element 102b without the driving element acts as a driven wheel which is actuated into rotation by the driving wheel.

Alternatively, in another embodiment, the number of the driving element is two, i.e. each of the ground contacting elements 102a, 102b is provided with one driving element, and thus the rotation speed of the ground contacting elements 102a, 102b may be controlled separately. The ground contacting elements 102a, 102b have an identical rotation speed during a normal travel.

Throughout the above first embodiment, second embodiment and the third embodiment, an axle center of the or each ground contacting element is located below the footboard 101, and the or each ground contacting element is also wholly located below the footboard 101.

As shown in FIG. 3b, the roller-skating device further includes a fixing base 100a,to which the ground contacting elements 102a, 102b are coupled, and the fixing base 100a is fixed to the lower surface of the footboard 101. In a specific application, the ground contacting elements 102a, 102b may be integrated with the fixing base 100a, and then the fixing base 100a is fixed to the lower surface of the footboard 101. The fixing base 100a is fixed to the lower surface of the footboard in a horizontal direction.

In other embodiments, the fixing base may be fixed to the lower surface of the footboard in a vertical direction. The fixing base is provided with a hole structure through which the transmission shaft of the motor passes. A ground contacting element or a set of ground contacting elements are coupled at each end of the transmission shaft, such that the entire ground contacting elements are arranged below the footboard.

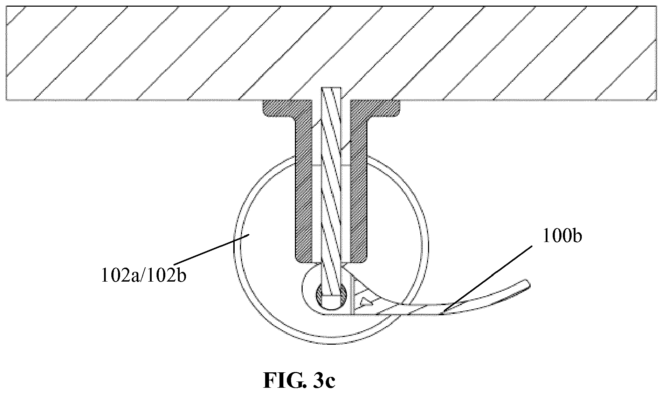

It is noted that, in other embodiments, any other suitable structure may be employed for coupling the ground contacting elements 102a, 102b to the footboard 101. FIG. 3c is a schematic diagram of an alternative of the fixing base in the third embodiment of the present invention. As shown in FIG. 3c, the ground contacting elements 102a, 102b are coupled to the lower surface of the footboard by a quick release structure 100b.

### FOURTH EMBODIMENT (the two ground contacting elements 102a and 102b is provided to be spaced by a long distance)

Unlike the roller-skating device of the third embodiment, when the roller-skating device in the present embodiment includes the ground contacting elements 102a, 102b and there is a relatively large transverse distance between these ground contacting elements, an axle center of each ground contacting elements 102a, 102b is located below the footboard 101, but a part of the ground contacting elements protrudes upwards beyond the footboard 101.

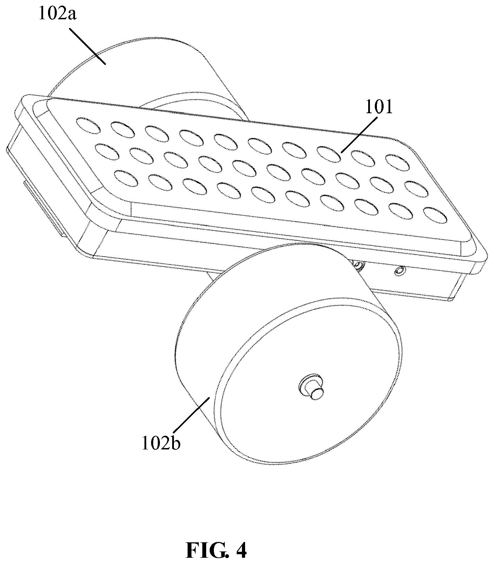

A brief structural schematic diagram of the roller-skating device according to a fourth embodiment is obtained by sinking the whole footboard 101 in the third embodiment, as shown in FIG. 4.

Alternatively, in another embodiment, the number of the driving element is two, i.e. each of the ground contacting elements 102a, 102b is provided with one driving element, and thus the rotation speed of the ground contacting elements 102a, 102b may be controlled separately. The ground contacting elements 102a, 102b have an identical rotation speed during a normal travel.

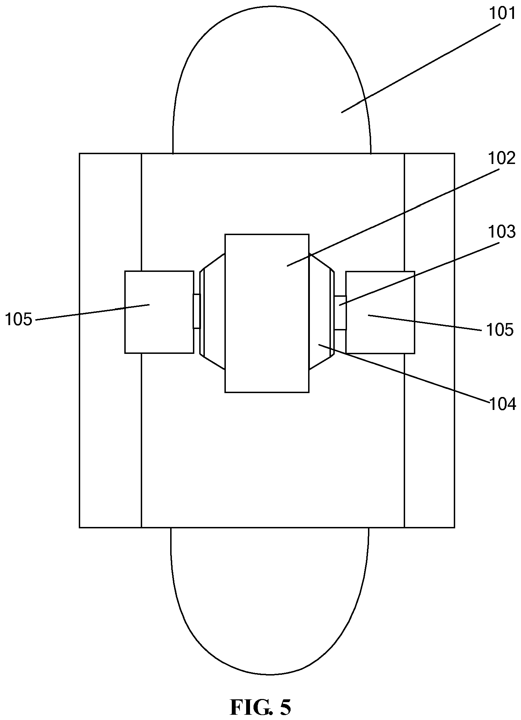

FIG. 5 is a structural schematic diagram of the roller-skating device according to a fifth embodiment of the present invention. As shown in FIG. 5, the roller-skating device in the form of roller-skating shoes, includes one ground contacting element 102. This ground contacting element 102 is located at the center of the footboard 101, and a motor is provided in a hub of the ground contacting element 102. A transmission shaft of the motor passes through the hub and is provided with a first bearing structure 104 at a position closed to the middle of the transmission shaft 103. This bearing structure is coupled to the ground contacting element 102 and drives the ground contacting element 102 into rotation.

In addition, in FIG. 5, a second bearing structure 105 may be provided at each end of the transmission shaft, and the bearing structures at the both ends of the transmission shaft are coupled to the footboard 101, so as to allow the motor and the transmission shaft to be arranged below the footboard 101 as an integer.

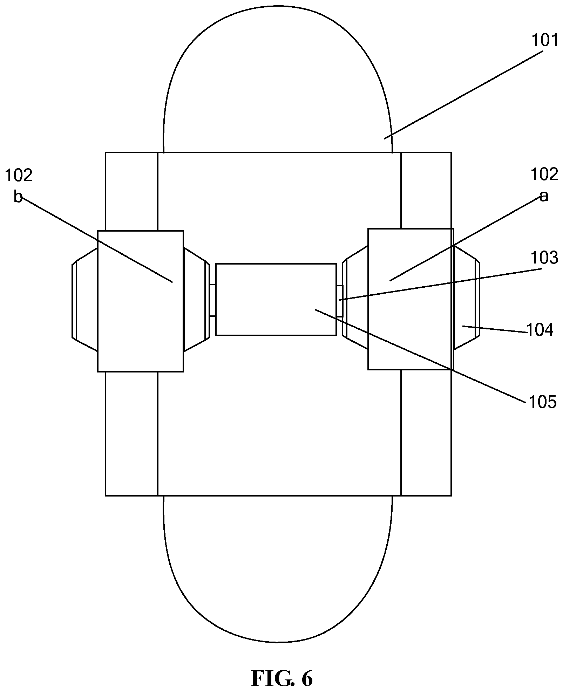

FIG. 6 is a structural schematic diagram of the roller-skating device according to a sixth embodiment of the present invention. As shown in FIG. 6, the roller-skating device in the form of roller-skating shoes, includes two ground contacting elements, 102a and 102b. The ground contacting element 102a is arranged in a position closed to a left lateral edge of the footboard 101 and the ground contacting element 102b is arranged in a position closed to a right lateral edge of the footboard 101. Each of the ground contacting elements 102a, 102b is provided with one motor. The arrangement of the motor and a transmission shaft may refer to the embodiment shown in FIG. 5.

The difference of the embodiments shown in FIG. 5 and FIG. 6 from those shown in FIGS. 1-4 lies in that the footboard 101 is not rectangle in shape, but with circular arcs at both ends.

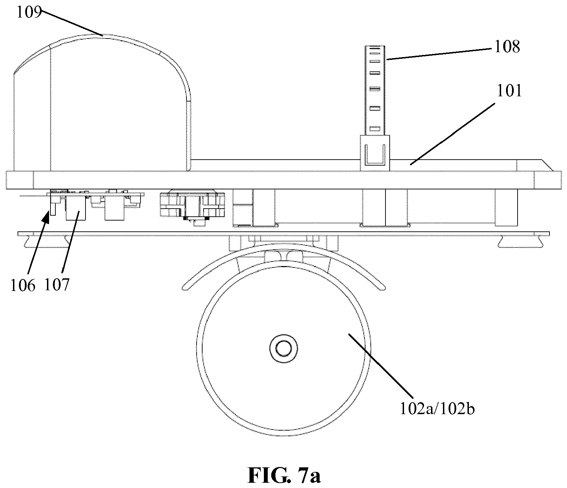

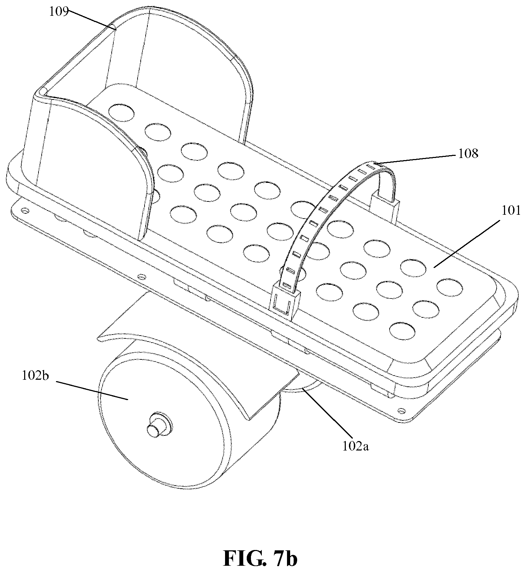

FIG. 7a and FIG. 7b are two of structural schematic diagrams of the roller-skating device according to a seventh embodiment of the present invention. As shown in FIG. 7a and FIG. 7b, compared to the embodiment shown in FIG. 1, a binding unit is added to the roller-skating device. The binding unit is provided on the footboard to secure a foot or a part above foot of the driver of the roller-skating device. Optionally, the binding unit may be a structure with a Velcro or a fastening buckle, and the foot or the part above foot of the driver of the roller-skating device is secured by the Velcro or the fastening buckle, to prevent the driver from falling from the roller-skating shoes. The foot for example is an instep, and the part above foot for example is an ankle or shank.

Further, the roller-skating device according to the present embodiment also includes a shield 109, which is configured to contact with a heel of one foot standing on the footboard 101 so as to firmly secure the foot onto the footboard 101 during the roller-skating. The shield specifically may be arc in shape, such that the shield fits closely with the heel and provides a stable supporting effect.

In the present embodiment, the stabilization of the foot of the driver is provided at the rear and the front by the binding unit and the shield, such that the risk of the driver falling from the roller-skating shoes and getting hurt during the roller-skating is effectively prevented.

Further, in any one of the embodiments of the present invention, optionally, the roller-skating device further includes a battery compartment 106, in which a battery pack 107 is provided. The battery pack 107 is configured to supply electricity for the driving element and other structures or circuits requiring electricity. Specifically, the footboard 101 is provided with a hollow cavity, in which the battery compartment 106 is provided.

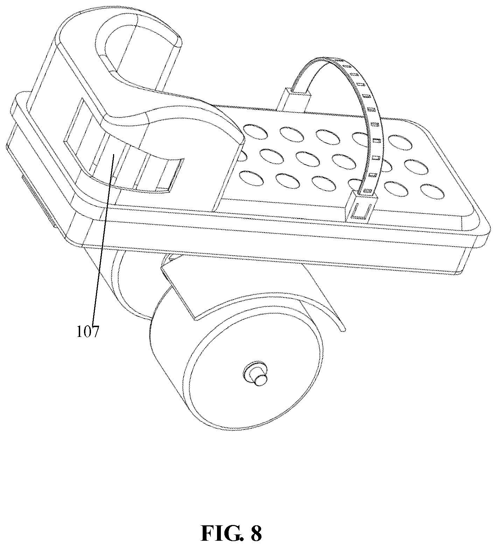

FIG. 8 is a local schematic diagram of the roller-skating device according to an eighth embodiment of the present invention. In the present embodiment, the roller-skating device in the form of roller-skating shoes, is provided with the battery pack 107 at the rear part. Specifically, the battery compartment for example is provided in a hollow cavity of the shield 109, and the battery pack 107 is provided in this battery compartment.

It is noted that, in another embodiment, unlike that shown in FIG. 8, the battery pack 107 is carried by the driver and is connected to the electric circuits or elements, such as the first controller, the motor or the like in the roller-skating shoes, via an external power cord.

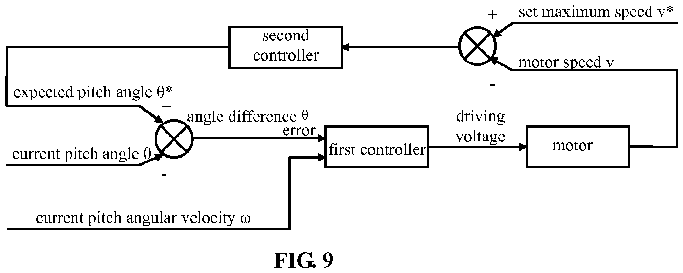

FIG. 9 is a schematic diagram shown the control principle of the roller-skating device according to a ninth embodiment of the present invention. As shown in FIG. 9, when the footboard tilts forwards or backwards, the first controller is configured to generate a driving electric signal for controlling an output torque of the driving element according to an angle difference between an expected pitch angle θ* and a current pitch angle θ of the footboard. Specifically, the driving electric signal is generated according to a current pitch angular velocity ω and the angle difference *θₑᵣᵣₒᵣ* between the expected pitch angle θ* and the current pitch angle θ of the footboard, to control the output torque of the driving element. In the present embodiment, the driving electric signal for example is a driving voltage, and the first controller (also called balance controller) for example is a PID controller.

Specifically, the roller-skating device may further include a second controller (also called speed controller). The second controller is configured to determine the expected pitch angle θ* according to a current rotation speed *V* and a set maximum rotation speed *V*^{*} of the driving element. In the present embodiment, the second controller for example is also a PID controller.

Further, the second controller is configured to determine whether the current rotation speed *V* of the driving element exceeds the set maximum rotation speed *V*^{*} or not. If the current rotation speed of the driving element exceeds the set maximum rotation speed, it indicates that the roller-skating device is about to enter an overspeed state, then a set non-zero expected pitch angle θ* is outputted, and thus the angle difference *θₑᵣᵣₒᵣ* is calculated from the set non-zero expected pitch angle and the current pitch angle θ; and the first controller generates the driving electric signal according to this angle difference *θₑᵣᵣₒᵣ*, to control the output torque of the driving element and finally bring the footboard to tilt towards a direction opposite to a travel direction, such that a travel speed of the roller-skating device is limited to prevent the travel speed from exceeding a threshold value of the travel speed. If the current rotation speed of the driving element does not exceed the set maximum rotation speed, the expected pitch angle θ* is zero, then the angle difference *θₑᵣᵣₒᵣ* is calculated, and the first controller generates the driving electric signal according to this angle difference *θₑᵣᵣₒᵣ*, to control the output torque of the driving element and finally bring the footboard to be in a horizontal state dynamically.

Specifically, the roller-skating device may further include a second sensor, which is configured to sense the current rotation speed of the driving element.

In addition, it is noted that, in some specific applications, the driving electric signal can be generated without considering the current pitch angular velocity.

In addition, it is noted that the expected pitch angle can be determined without configuring the second controller in some specific applications, but the first controller is reused. Specifically, the first controller may be configured to determine the expected pitch angle θ* according to the current rotation speed *V* and the set maximum rotation speed *V*^{*} of the driving element, and also may be configured to generate the driving electric signal for controlling the output torque of the driving element according to the angle difference between the expected pitch angle θ* and the current pitch angle θ of the footboard.

In addition, it is noted that the output signal of the driving element may be in other forms, the output torque is only an example in the present embodiment, and different driving elements may have output signals of different types.

In another specific application, in the case that the second controller is provided, the second controller also may be reused as the first controller. Specifically, the second controller may be configured to determine the expected pitch angle θ* according to the current rotation speed *V* and the set maximum rotation speed *V*^{*} of the driving element, and also may be configured to generate the driving electric signal for controlling the output torque of the driving element according to the angle difference between the expected pitch angle θ* and the current pitch angle θ of the footboard.

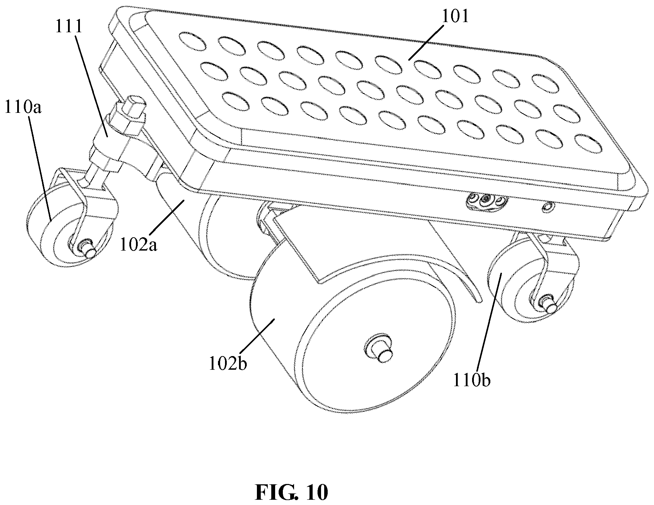

FIG. 10 is a structural schematic diagram of the arrangement of auxiliary ground contacting elements according to a tenth embodiment of the present invention. As shown in FIG. 10, compared to the embodiment shown in FIG. 1, the footboard 101 is provided with one auxiliary ground contacting element 110a in the front for limiting a maximum angle of forward tilting, and one auxiliary ground contacting element 110b at the rear for limiting a maximum angle of backward tilting.

Specifically, in the present embodiment, a fixing block 111 may be arranged under the footboard 101, and the auxiliary ground contacting element 110a or 110b may be fixed on the fixing block 111.

It is noted that, the auxiliary ground contacting elements as described with the reference to FIG. 10 may be added to the embodiments of the roller-skating device except that shown in FIG. 1.

In addition, a number of the auxiliary ground contacting elements is not limited to these embodiments. For example, in some applications, the auxiliary ground contacting element is only provided at a front part or a rear part of the footboard. Further, a number of the auxiliary ground contacting elements provided at the front part or at the rear part is not limited to these embodiments, and multiple auxiliary ground contacting elements may be arranged into a set of those.

In the case where the auxiliary ground contacting elements are present, for the convenience of distinguishing, the ground contacting elements in the preceding embodiments is also called main ground contacting elements, and a rolling perimeter of which is larger than that of the auxiliary ground contacting elements. It is noted that the main ground contacting elements and the auxiliary ground contacting elements are only an example of names, as long as the technical effects of them including forming a contacting point with a running surface (e.g. the ground).

In one embodiment, the auxiliary ground contacting element is provided in front of the main ground contacting elements to contact with the ground when the footboard tilts forwards, so as to limit the maximum angle of the forward tilting of the footboard and thus to control a value of the output signal in such a way that the value of the output signal does not exceeds a set first threshold. The entire auxiliary ground contacting element is entirely located below the footboard. And specifically, a front fork structure is provided on a lower surface of the footboard, and the auxiliary ground contacting element is arranged below the footboard via the front fork structure.

In one present embodiment, the auxiliary ground contacting element is provided at rear of the main ground contacting elements to contact with the ground when the footboard tilts backwards, so as to limit the maximum angle of the backward tilting of the footboard and thus to control the value of the output signal in such a way that the value of the output signal does not exceeds a set second threshold. The entire auxiliary ground contacting element is located below the footboard. And specifically, a rear fork structure is provided on the lower surface of the footboard, and the auxiliary ground contacting element is arranged below the footboard via the rear fork structure.

In addition, it is noted that in addition to limit the maximum angle of tilting of the footboard, the auxiliary ground contacting elements can further assist the skating.

In the above embodiments, it is noted that the roller-skating device may work in an electric actuation state using the motor, or work in a manpower actuation state.

In order to allow the steering, the steering sensor is configured to sense a posture of the foot of the driver on the footboard. Each third controller is configured to control the output signal of the corresponding driving element according to the posture of the foot of the driver on the footboard corresponding to the third controller, such that speed differences (a first speed difference and a second speed difference described below) for the steering of a single roller-skating device are formed between the two ground contacting elements corresponding to the third controller, and a speed difference (a third speed difference described below) for the steering of two roller-skating devices as an entirety is formed between the two roller-skating devices.

In a specific application, the steering sensors sense the posture of the foot of the driver on the footboard corresponding to the steering sensor and generate a first steering sensing data and a second steering sensing data. The third controller is configured to generate the first steering sensing data or the second steering sensing data according to the posture of the foot of the driver on the corresponding footboard sensed by each of the steering sensors; generate a first steering control instruction according to the first steering sensing data and generate a second steering control instruction according to the second steering sensing data; then control the action of the ground contacting element corresponding to the first steering control instruction according to the first steering control instruction to and control the action of the ground contacting element corresponding to the second steering control instruction according to the second steering control instruction, such that the first and sec speed differences for controlling steering are formed between every two main ground contacting elements, and the third speed difference for controlling steering is formed between the two roller-skating devices.

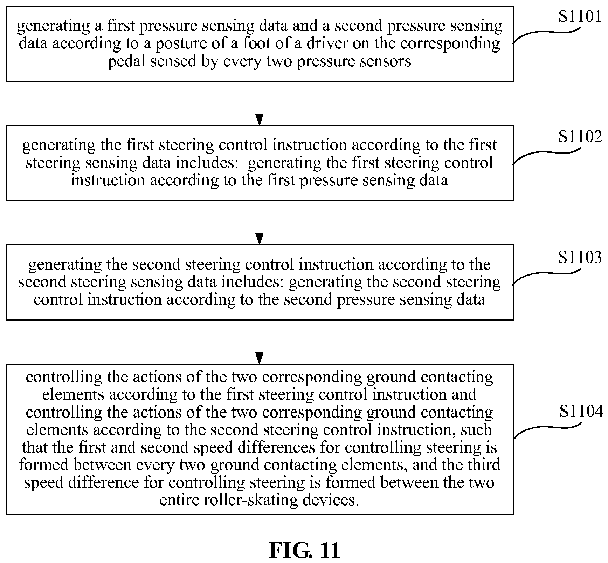

FIG. 11 is a schematic flow chart of a steering control method according to an eleventh embodiment of the present invention. In the present embodiment, for the purpose of illustration, it is taken as an example that each roller-skating device is provided with two pressure sensors and the third controller, in which the third controller is configured to implement the technical relative to a direct steering or an indirect steering. Specifically, the two roller-skating devices are assembled together with a connector. As shown in FIG. 11, the steering control method including the following operations.

S1101: first and second pressure sensing data are generated according to postures of the foot of the driver on the corresponding pedals sensed by every two pressure sensors.

In the present embodiment, the posture of the foot may be a horizontal rubbing of the driver on the footboard.

S1102: the first steering control instruction is generated according to the first steering sensing data as follow: the first steering control instruction is generated according to the first pressure sensing data.

S1103: the second steering control instruction is generated according to the second steering sensing data as follow: the second steering control instruction is generated according to the second pressure sensing data.

As described above, due to each roller-skating device is provided with two pressure sensors, and one pressure sensor generates one sensing data. The first steering control instruction are generated according to the first steering sensing date (according to a difference between the two first steering sensing data); similarly, the second steering control instruction is generated according to a difference between the two second steering sensing data.

S1104: the actions of the two corresponding ground contacting elements are controlled according to the first steering control instruction and the actions of the two corresponding ground contacting elements are controlled according to the second steering control instruction, such that the first and second speed differences for controlling steering is formed between the every two ground contacting elements, and the third speed difference for controlling steering is formed between the two entire roller-skating devices.

In the present invention, because each roller-skating device includes at least two wheels, a turning of each roller-skating device itself and a relative turning between the two roller-skating devices is necessary during the steering. Thus, the rotation speed differences, i.e. the first rotation speed difference and the second rotation speed difference, are provided between the two wheels of each roller-skating device; and due to the relative turning between the two roller-skating devices, the third rotation speed difference is provided between the two entireties of roller-skating devices.

For example, in a specific implementation, the speeds of the wheels increase from left to right when steering left, and the speeds of the wheels decrease from left to right when steering right, such that the above first rotation speed difference, the second rotation speed difference and the third rotation speed difference are formed.

The formation principle of the first rotation speed difference and the second rotation speed difference in the present embodiment is similar to that of the rotation speed difference for controlling steering of the above single roller-skating device.

Alternatively, in another embodiment, each roller-skating device may include steering sensors of different types.

Alternatively, in yet another embodiment, the steering sensor may be a steering shaft, which is configured to sense the posture of the foot of the driver on the footboard, in order to generate a first steering sensing torque and/or a second steering sensing torque. Accordingly, generating the first steering control instruction according to the first steering sensing data includes generating the first steering control instruction according to the first steering sensing torque; and/or generating the second steering control instruction according to the second steering sensing data includes generating the second steering control instruction according to the second steering sensing torque. The steering shaft is configured to be perpendicular to the travel direction of the roller-skating device.

Alternatively, in still another embodiment, the steering sensor may be a gyroscope, which is configured to sense the posture of the foot of the driver on the footboard, in order to generate a first angular motion sensing data and/or a second angular motion sensing data. Accordingly, generating the first steering control instruction according to the first steering sensing data includes generating the first steering control instruction according to the first angular motion sensing data; and/or generating the second steering control instruction according to the second steering sensing data includes generating the second steering control instruction according to the second angular motion sensing data.

The first steering control instruction and/or the second steering control instruction is generated according to the posture of horizontal rubbing of the foot of the driver on the footboard sensed by the steering sensor.

Alternatively, in a further embodiment, springs are provided on the left and right of the footboard of the roller-skating devices, such that the footboard may tilt left or right. The steering sensor is a photoelectric sensor, which is configured to sense the posture of the foot of the driver on the footboard, such that a first photoelectric sensing data and/or a second photoelectric sensing data may be generated by a left tilting or a right tilting of the footboard. Accordingly, generating the first steering control instruction according to the first steering sensing data includes generating the first steering control instruction according to the first photoelectric sensing data; and/or generating the second steering control instruction according to the second steering sensing data includes generating the second steering control instruction according to the second photoelectric sensing data.

As for a single roller-skating device with two main ground contacting elements, a generation principle of a rotation speed difference of the two main ground contacting elements is as follows. The steering sensing data is generated according to the posture of the foot of the driver on the footboard sensed by the steering sensor; then the steering control instructions are generated according to the steering sensing data; and the two ground contacting elements are controlled according to the steering control instructions, such that a rotation speed difference for controlling steering is formed between the two ground contacting elements. The steering sensor may be the above photoelectric sensor, steering shaft or the like.

Based on the above embodiments, a manned status sensor is provided on at least one roller-skating device, which is configured to sense whether a driver is standing on the roller-skating device on one foot or not; if yes, the provided steering sensors sense the posture of the foot of the driver on the footboard corresponding to each steering sensor, such that the first steering sensing data and/or the second steering sensing data is generated.

It is noted that a data communication between the above two roller-skating devices is possible, and if one of the roller-skating devices generates the first steering sensing data, the other roller-skating device is triggered to generate the second steering sensing data. Thus, the roller-skating device being triggered may be provided with no steering sensor.

In the present embodiment, the first controller may be reused as the third controller. While, it is noted that in the case of without the addition of the third controller, in addition to reusing the first controller as the third controller, the second controller also may be reused as the third controller. Or, in the case of the third controller being added, the third controller may be reused as the above first controller or the second controller.

In the above embodiments, specifically, the motor may be an in-wheel motor, and in other embodiments, the motor also may be a high-speed motor. And in the above embodiments, the wheels may be further provided with covers.

In addition, in a further embodiment, in the case that each roller-skating device includes the steering sensor and each roller-skating device includes the steering sensor, the footboard, the third controller and one main ground contacting element, then the steering sensor is configured to sense the posture of the foot of the driver on the footboard, and each third controller is configured to control the output signal of the corresponding driving element according to the posture of the foot of the driver on the footboard corresponding to each third controller, such that a speed difference for the steering of the two roller-skating devices as an entirety is formed between the two roller-skating devices.

In an application, specifically, each steering sensor senses the posture of the foot of the driver on the footboard corresponding to each steering sensor, in order to generate a first steering sensing data or a second steering sensing data. Each third controller is configured to generate the first steering control instruction according to the first steering sensing data or the second steering control instruction according to the second steering sensing data; and to control the action of the ground contacting element corresponding to the first steering control instruction or the action of the ground contacting element corresponding to the second steering control instruction, such that the third speed difference for controlling steering is formed between the two main ground contacting elements.

In the case of each roller-skating device including only one main ground contacting element, the steering control of the roller-skating device is similar to that of the roller-skating device including two main ground contacting elements, i.e. the output torque of the motor of each roller-skating device is controlled separately, thereby the rotation speeds of the two main ground contacting elements are controlled and a rotation speed difference for controlling steering is finally formed.

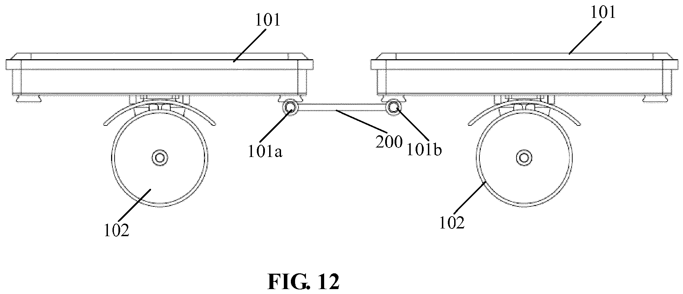

FIG. 12 is a structural schematic diagram of the electric balance vehicle according to a twelfth embodiment of the present invention. As shown is FIG. 12, the structure of a single roller-skating device has been shown in FIG. 1, and a connector 300 assembles two roller-skating devices with each other along a longitudinal direction in the manner of end-to-end.

In the present embodiment, specifically, a first fixing block 101a is provided at a trailing part of the footboard 101 of one of the roller-skating devices, and a second fixing block 101b is provided at a leading part of the footboard 101 of the other roller-skating device. One end of the connector 200 is fixed to the first fixing block 101a, and the other end of the connector is fixed to the second fixing block 101b.

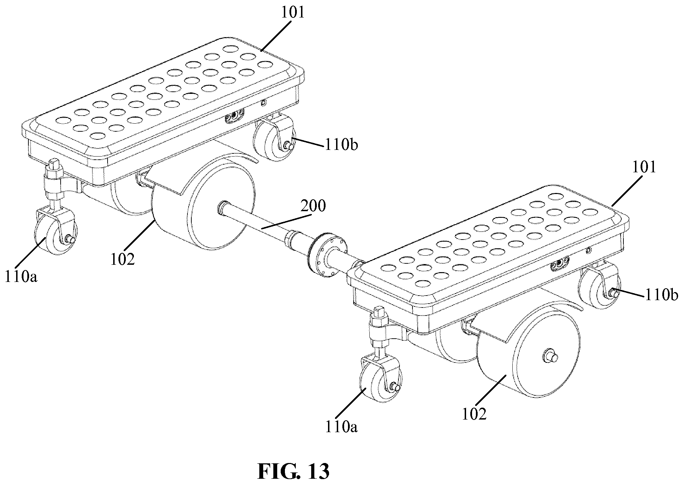

FIG. 13 is a structural schematic diagram of the electric balance vehicle according to a thirteenth embodiment of the present invention. As shown is FIG. 13, one end of the connector 200 is fixed on a side of one of the two roller-skating devices shown in FIG. 10, and the other end of the connector is fixed on a side of the other roller-skating device facing to the side of said one of the roller-skating device, so as to assemble the two roller-skating devices with each other. Specifically, the connector is configured to assemble the two roller-skating devices with each other along a transverse direction in the manner of side-to-side, .

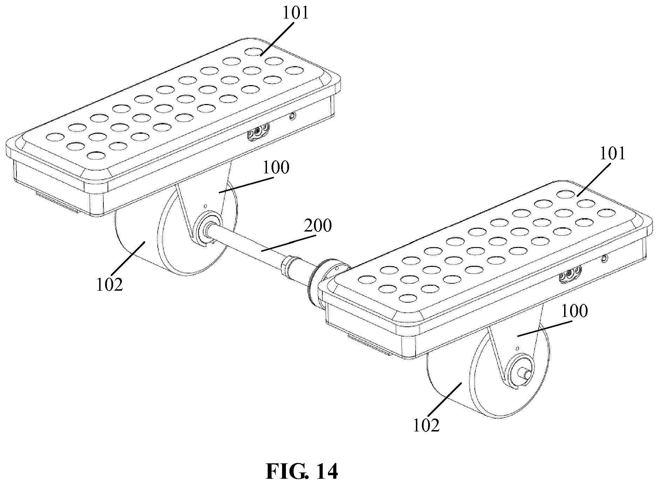

FIG. 14 is a structural schematic diagram of the electric balance vehicle according to a fourteenth embodiment of the present invention. As shown is FIG. 14, one end of the connector 200 is fixed on a side of one of the two roller-skating devices shown in FIG. 1, and the other end of the connector is fixed on a side of the other roller-skating device facing to the side of said one of the roller-skating device, so as to assemble the two roller-skating devices with each other. Specifically, the connector is configured to assemble the two roller-skating devices with each other along the transverse direction in the manner of side-to-side.

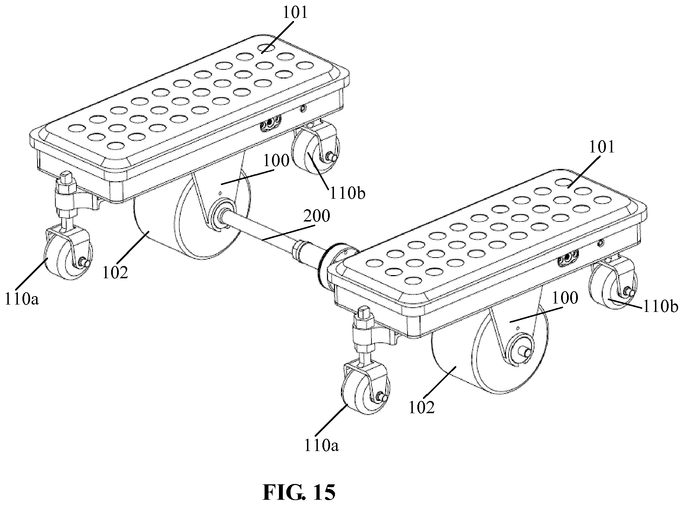

FIG. 15 is a structural schematic diagram of the electric balance vehicle according to a fifteenth embodiment of the present invention. As shown is FIG. 15, compared to FIG. 1, auxiliary main ground contacting elements 110a, 110b are added, and the fixing base 100 shown in FIG. 3b is modified so as to be arranged in a vertical direction and fixed on the lower surface of the footboard. The fixing base is provided with a hole structure, through which a transmission shaft of the motor passes. One of the main ground contacting elements 102 is coupled to one end of the transmission shaft, and the other main ground contacting element is coupled to the other end of the transmission shaft, so that the main ground contacting elements 102 are arranged below the footboard 102 as an entirety.

In the above embodiments, one end of the connector is connected to the transmission shaft of one of the two roller-skating devices, and the other end of the connector is connected to the transmission shaft of the other roller-skating device.

In the above embodiments, optionally, the length of the connector may be adjustable, so as to adjust the distance between the two adjacent roller-skating devices.

In the above embodiments, optionally, a turning mechanism may be provided at the middle of the connector, such that the part located on the left of the turning mechanism of the connector and the part located on the right of the turning mechanism of the connector can freely turn independently of each other, under the effect of the turning mechanism.

In addition, in the case of the two roller-skating devices being assembled with each other by means of the connector, the pedals of the two roller-skating devices may tilt forwards or backwards independently. And the electric balance vehicle formed by the assembly may move forwards or backwards as an entirety due to the operations of the posture of the foot of the driver.

In addition, the above first controller, the second controller and the third controller may be provided on the fixing base, so as to adapt to a relative position between the main ground contacting elements and the footboard which is adjustable in a horizontal plane.

Of course, in another embodiment, if no horizontal adjustment of the relative position between the main ground contacting elements and the footboard is required, the above first controller, the second controller and the third controller may be provided in the footboard.

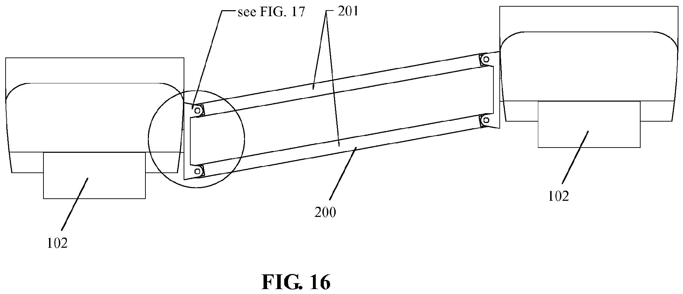

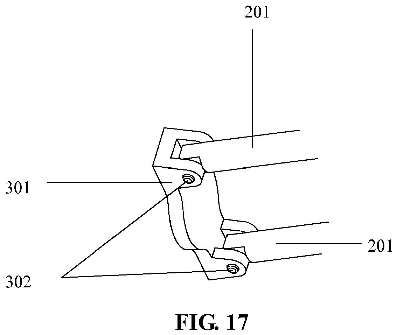

FIG. 16 is a structural schematic diagram of the electric balance vehicle according to a sixteenth embodiment of the present invention, and FIG. 17 is a schematic diagram of the details of the both ends of the connector according to a seventeenth embodiment of the present invention. For the reason of clarity, only the ground contacting elements 102 and the connector 200 are schematically shown in FIG. 16. As shown in FIG. 16 and FIG. 17, the connector is further configured to allow the mutual action between the two roller-skating devices in a perpendicular direction. In the present embodiment, specifically, a fixing mount 301 and a rotation shaft 302 are provided at each end of the connector; the fixing mount 301 is provided on the corresponding roller-skating device , and the rotation shaft 302 is provided on the fixing mount 301. One end of the connector is mounted around one rotation shaft 302, and the other end of the connector is mounted around the other rotation shaft, so as to allow the mutual action between the two roller-skating devices in the perpendicular direction.

In the present embodiment, specifically, the connector 200 includes two connection rods 201 arranged one above the other in parallel. Each connection rod 201 corresponds to one fixing mount and one rotation shaft 302, thus the mutual action between the two roller-skating devices in the perpendicular direction may be ensured. For example, in particular in the case of encountering an obstacle, the two roller-skating devices may mutually act in the perpendicular direction, in order to ensure the roller-skating devices to pass over the obstacle.

Although the two connection rods 201 in FIG. 16 and FIG. 17 are arranged one above the other in parallel, the two connection rods may be arranged one behind the other in parallel.

It is noted that the vertical movement of the two roller-skating devices is implemented by the cooperation of the fixing mounts and the rotation shafts, while other alternatives, for example bearings, also may be employed by those skilled in the art with the inspiration of the present invention.

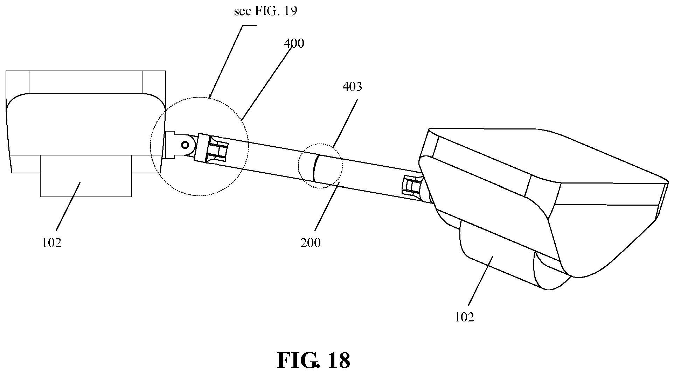

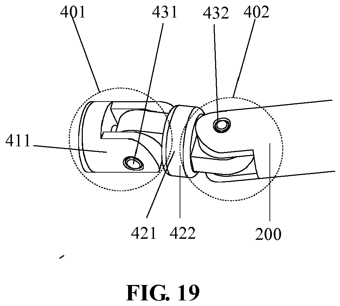

FIG. 18 is a structural schematic diagram of the electric balance vehicle according to an eighteenth embodiment of the present invention, and FIG. 19 is a schematic diagram of the details of the both ends of the connector according to a nineteenth embodiment of the present invention. Likewise, for the reason of clarity, in FIG. 18, only the ground contacting elements 102 and the connector 200 are schematically shown. As shown in FIG. 18 and FIG. 19, each end of the connector 200 is provided with an omnidirectional joint 400, and each omnidirectional joint 400 is arranged on a corresponding roller-skating device, so as to allow the mutual action between the two roller-skating devices in any direction.

The omnidirectional joint 400 includes a first motion joint 401 and a second motion joint 402, the first motion joint 401 and the second motion joint 402 provided at each end of the connector cooperate with each other to allow the two roller-skating devices to mutually act in any direction.

Specifically, the first motion joint 401 includes a fixed fork 411 and a first rotation fork 421, in which the fixed fork 411 is provided on a corresponding roller-skating device, and the first rotation fork 421 is arranged on the fixed fork 412 via a first rotation shaft 431.The second motion joint 402 includes a second rotation fork 422 which is connected to the first rotation fork 421 and which is arranged on an end of the connector 200 via a second rotation shaft 432.

In the present embodiment, it is noted that the first rotation fork 421 and the second rotation fork 422 are produced in one piece to form an integrated rotation fork. Of course, in other embodiments, the first rotation fork and the second rotation fork may be separated, as long as the omnidirectional rotation may be implemented. The omnidirectional rotation for example is also called 360 degree free rotation.

Further, a third motion joint 403 is provided at the middle of the connector 200, so as to allow the mutual action between the two roller-skating devices in any direction. The structure of the third motion joint 403 may be similar to that of the first motion joint or the second motion joint. In the case of the omnidirectional joint being provided, the third motion joint 403 may assist the mutual action between the two roller-skating devices in any direction.

While, it is noted that, in other embodiments, only the third motion joint 403 is provided to allow the mutual action between the two roller-skating devices in any direction.

With the inspiration of the above embodiments, a balance vehicle also may include four roller-skating devices, in which the two roller-skating devices one behind the other are connected by a connector and the two roller-skating devices side by side are connected by a connector. In this case, the balance vehicle can be driven by two drivers one behind the other. In the present invention, the expressions "include" or "may include" indicates that corresponding functions, operations or elements exist, but not limited to one or more additional functions, operations or elements. In the present invention, the words such as "include" and/or "have" may be understood as indicating some characters, numbers, steps, operations, components, elements or a combination thereof exist or the possibility of addition.

In the present invention, the expressions "A or B", "at least one of A and/or B" or "one or more of A and/or B" may include all possible combinations of the items listed. For example, the expression "A or B", "at least one of A and B" or "at least one of A or B" may include: (1) at least one A, (2) at least one B, or (3) at least one A and at least one B.

The expressions "first", "second", "the first", or "the second" used in the embodiments of the present invention may define various parts but not relative to order and/or importance, while these expressions impart no limitations to the corresponding parts. The above expressions only are used for the purpose of distinguishing elements from others. For example, a first driver equipment and a second driver equipment indicate different driver equipment, although both are driver equipment. For example, a first element can be called as a second element, and similarly, a second element can be called as a first element, without departing from the scope of the present invention.

If an element (e.g. a first element) is referred to "(operably or communicatively) couple" with another element (e.g. a second element) or "be (operably or communicatively) coupled to" another element (e.g. a second element) or "be connected to" another element (e.g. a second element), it should be understood as this element being directly connected to the another element or indirectly connected to the another element via yet another element (e.g. a third element). In contrast, it should be understood that if an element (e.g. a first element) is referred to "directly connected" or "directly coupled" to another element (a second element), then no element (e.g. a third element) is inserted between this element and another element.

The expressions "configured to" used herein may be interchangeable with the following expressions: "suitable for", "have the ability to...", "designed to", "adapted to", "produced to" or "able to". The words "configured to" are not necessarily configured to indicate "specially designed to" in hardware. Alternatively, in some cases, the expression "the equipment configured to ..." may indicate this equipment and other equipment or parts together "being able to ... ". For example, the phrase "a processor suitable for (or, configured for) executing A, B and C" may indicate a dedicated processor (e.g. an embedded processor) which is specifically configured to execute corresponding operations or a general-purpose processor (e.g. CPU or AP) for executing corresponding operations by executing one or more software programs stored in a memory.

The device embodiments described above are merely illustrative, in which the modules described as separated components may be physically separated or not, and the components illustrated as modules may be physical modules or not, i.e., may be located in one position or distributed into multiple network modules; a part of or all modules can be selected according to actual requirement to implement the purposes of solutions of the embodiments. Those of ordinary skill in the art can understand and implement without creative work.

## Claims

1. A roller-skating device, including: a footboard, one or more ground contacting elements, a first sensor, one or more driving elements and a first controller, the footboard being coupled to the first sensor and the one or more ground contacting elements coupled to the driving element, the first controller being coupled to the first sensor and the driving element, wherein:
the footboard is configured to stand on one foot, and to tile forwards or backwards in the case of one foot standing;
the one or more ground contacting elements are configured to act due to an actuation of the driving element;
the first sensor is configured to sense a posture of a driver on the footboard;
the one or more driving elements are configured to generate an output signal for controlling an action of the ground contacting elements and maintaining the entire roller-skating device in balance; and
the first controller is configured to control the generation of the output signal according to the posture.

2. The roller-skating device of claim 1, wherein a number of the ground contacting elements is one, while a number of the driving element is one; or the number of the ground contacting elements is two while the number of the driving element is one, the driving element being coupled to the two ground contacting elements; or the number of the ground contacting elements is two while the number of the driving element is two, each ground contacting element being provided with one driving element.

3. The roller-skating device of claim 1, wherein axle centers of the one or more ground contacting elements are located below the footboard, and the one or more ground contacting elements are wholly located below the footboard; or the axle centers of the one or more ground contacting elements are located below the footboard, and a part of the ground contacting elements protrudes upwards beyond the footboard.

4. The roller-skating device of claim 1, wherein the one or more ground contacting elements are wheels, a transmission shaft of the driving element is arranged transversely, and each end of the transmission shaft is provided with one said wheel, the driving element is integrated in a hub of one of the wheels, and the driving element is directly connected, via the transmission shaft, to the wheel in which the driving element is integrated and is coupled to the wheel without the driving element.

5. The roller-skating device of claim 1, wherein the roller-skating device comprises two ground contacting elements, one of the ground contacting elements is arranged in a position closed to a left lateral edge of the footboard and the other ground contacting element is arranged in a position closed to a right lateral edge of the footboard, or each of the ground contacting elements is arranged in a position closed to the center of the footboard.

6. The roller-skating device of claim 1, further comprises a battery compartment in which a battery pack is provided, and the battery pack is configured to supply electricity for the driving element.

7. The roller-skating device of claim 6, wherein the battery compartment is arranged under the footboard.

8. The roller-skating device of claim 1, further comprises a fixing base, the ground contacting elements are coupled to the fixing base, and the fixing base is fixed to a lower surface of the footboard.

9. The roller-skating device of claim 1, wherein further comprising a second controller, which is configured to determine an expected pitch angle of the footboard according to a current rotation speed and a set maximum rotation speed of the driving element.

10. The roller-skating device of claim 9, wherein the first controller is further configured to generate a driving electric signal for controlling the output signal of the driving element according to a current pitch angular velocity of the footboard and an angle difference between the expected pitch angle and a current pitch angle of the footboard, when the footboard tilts forwards or backwards.

11. The roller-skating device of claim 1, further comprises a second sensor, which is configured to sense a current rotation speed of the driving element.

12. The roller-skating device of claim 1, wherein the ground contacting elements are wheels and a number of which is two, the roller-skating device further comprises a steering sensor and a third controller, the steering sensor is configured to sense the posture of a foot of the driver on the footboard, and the third controller is configured to control the action of the ground contacting elements according to the posture of the foot so as to generate a speed difference for controlling steering.

13. The roller-skating device of claim 12, wherein the steering sensor is a pressure sensor configured to sense the posture of the foot of the driver on the footboard; or the steering sensor is a steering shaft configured to sense the posture of the foot of the driver on the roller-skating device; or the steering sensor is a gyroscope configured to sense the posture of the foot of the driver on the roller-skating device.

14. An electric balance vehicle, wherein the electric balance vehicle comprises at least two roller-skating devices of claim 1, a connector being provided between two adjacent roller-skating devices to assemble the two roller-skating devices into a whole ground contacting element ground contacting element ground contacting element.

15. The electric balance vehicle of claim 14, wherein a length of the connector is adjustable, so as to adjust a distance between the two adjacent roller-skating devices.

16. The electric balance vehicle of claim 14, wherein the connector is a connection rod, and one end of the connection rod is fixed on a side of one of the two roller-skating devices, and the other end of the connection rod is fixed on a side of the other roller-skating device facing to the side of the one of the two roller-skating devices, so as to assemble the two roller-skating devices with each other.

17. The electric balance vehicle of claim 14, wherein the connector is configured to assemble the two roller-skating devices with each other along a longitudinal direction in the manner of end-to-end.

18. The electric balance vehicle of claim 14, wherein a first fixing block is provided at a trailing part of the footboard of one of the roller-skating devices, a second fixing block is provided at a leading part of the footboard of the other roller-skating device, one end of the connector is fixed to the first fixing block, and the other end of the connector is fixed to the second fixing block.

19. The electric balance vehicle of claim 14, wherein the connector is configured to assemble the two roller-skating devices with each other along a transverse direction in the manner of side-to-side.

20. The electric balance vehicle of claim 14, wherein one end of the connector is connected to a transmission shaft of one of the roller-skating devices, and the other end of the connector is connected to a transmission shaft of the other roller-skating device.

21. The electric balance vehicle of claim 14, wherein each roller-skating device comprises a ground contacting element, a steering sensor intended to sense the posture of the foot of the driver on the footboard and a third controller, each of the third controllers is configured to control a output signal of the corresponding driving element according to the posture of the foot of the driver on the footboard corresponding to this third controller, such that a speed difference for steering the two roller-skating devices as an entirety is formed between the two roller-skating devices.

22. The electric balance vehicle of claim 14, wherein the connector is further intend to allow a mutual action between the two roller-skating devices in a perpendicular direction.

23. The electric balance vehicle of claim 22, wherein each end of the connector is provided with a fixing mount and a rotation shaft, the fixing mount is provided on the corresponding roller-skating device while the rotation shaft is provided on the fixing mount, one end of the connector is mounted around one of the rotation shafts, and the other end of the connector is mounted around the other rotation shaft, so as to allow the mutual action between the two roller-skating devices in the perpendicular direction.

24. The electric balance vehicle of claim 23, wherein each end of the connector is provided with an omnidirectional joint, each omnidirectional joint is arranged on a corresponding roller-skating device, so as to allow the mutual action between the two roller-skating devices in any direction.

25. The electric balance vehicle of claim 24, wherein the omnidirectional joint comprises a first motion joint and a second motion joint, the first motion joint and the second motion joint provided at each end of the connector cooperate with each other to allow the mutual action between the two roller-skating devices in any direction.

26. The electric balance vehicle of claim 25, wherein the first motion joint comprises a fixed fork and a first rotation fork, the fixed fork is provided on a corresponding roller-skating device, the first rotation fork is arranged on the fixed fork via a first rotation shaft; the second motion joint comprises a second rotation fork which is connected to the first rotation fork and which is arranged on the connector via a second rotation shaft.

27. The electric balance vehicle of any one of claims 1-26, wherein a third motion joint is provided at the middle of the connector, so as to allow the mutual action between the two roller-skating devices in any direction.
